# EUROPEAN PATENT APPLICATION

(11) **EP 1 203 683 A2**
(43) Date of publication of application: **08.05.2002**
(21) Application number: 01300558.2
(22) Date of filing: 22.01.2001
(51) Int. Cl.: B60K 6/04

(54) **Hybrid electric environmental protection automobile**

(30) Priority: 03.11.2000 CN 00117550
(71) Applicant: Shenzhen Minghua Environmental Protection Vehicle Co., Ltd., Futian District, Shenzhen (CN)
(72) Inventor: Li, Chuquan, Futian District, Shenzhen (CN)
(74) Representative: Robey, James Edward

(57) **Abstract**

The present invention discloses a multi-power electric environmental protection automobile, comprising a internal combustion engine power system, a battery power system, a power converter and a main reducer; the said internal combustion engine power system involves the orderly connected engine, clutch and transmission case; the first input end of the power converter is connected to the output end of the transmission case; the second input end of the power converter is connected to the output end of the battery power system; and the output end of the power converter is connected to the input end of the main reducer. The invention can effectively reduce pollution and make the automobile run long enough after charging. The logical location and structure of the power converter in the present invention make the automobile with multi-power systems of internal combustion engine and battery power to be really realized.

## Description

### FIELD OF THE INVENTION

The present invention relates to a vehicle, and more particularly to a multi-power electric environmental protection automobile, which is equipped with internal combustion engine power system as well as electric power system. The fuel of the internal combustion engine power system can be oil, gas, or any other appropriate fuel.

### BACKGROUND OF THE INVENTION

Following the increase of the automobile being used year after year, the exhaust emission is destroying the environment more and more seriously; especially in the thickly populated city and automobile concentrated area, the exhaust emission of automobile has become one of the main causes of air pollution. In order to solve the problem of the pollution by internal combustion engine automobiles, people have developed electric automobile. But it is far from perfection due to the technology of battery etc; this electric automobile can only run a very short distance after charging. Therefore, it can not be popular. In the interest of reducing pollution, especially in the thickly populated area, and ensuring the automobile run long enough after charging, some people put forward the idea of multi-power electric automobile which is equipped with a internal combustion engine and an electric power system as well. In the thickly populated area, the automobile can only be driven by the electric power system so as to reduce pollution or even no pollution. In the under populated area, the automobile can be driven by the internal combustion engine. In this way, the automobile can run long enough after charging and fully utilize the surplus energy of the internal combustion engine system to charge the accumulator of the electric power system, which can also reduce pollution and save energy at the same time. Yet, so far no one has ever presented a specific scheme which is practical and acceptable in the market about above-mentioned idea. In the existing scheme, it makes people most regret that the illogical location of power converter on the automobile leads to the failure of collocating the electromotor suitably on the automobile chassis; At the same time, the illogical internal structure of the power converter results in not only the difficulty of collocation of the electromotor but also instability of the working performance of the converter itself because of the structure complexity. The Chinese utility model ZL99211216.8 puts forward a clean and oil saving multi-power electric automobile, which is a typical attempt of the above-mentioned idea.

### SUMMARY OF THE INVENTION

The primary objective of the present invention is to provide a multi-power electric environmental protection automobile, which has two sets of power systems --the internal combustion engine power system and the battery power system. It can effectively reduce the pollution emitted from automobile and run long enough after charging. The logical location and structure of the power converter in the present invention make the automobile with multi-power systems of internal combustion engine and battery power to be really realized. The present invention has provided a feasible scheme of production and marketing of said automobile.

In accordance with the invention, there is provided a multi-power electric environmental protection automobile, comprising a internal combustion engine power system, a battery power system, a power converter and a main reducer; The said internal combustion engine power system involves the orderly connected engine, clutch and transmission case; characterized in that, the first input end of said power converter is connected to the output of said transmission case, the second input end of said power converter is connected to the output of said battery power system , the output end of said power converter is connected to the input end of said main reducer.

In above mentioned multi-power electric environmental protection automobile, the existing technical scheme is thrown away in which the power converter is located tightly behind of the clutch that is connected to the output of the engine. The power converter is set between the transmission case of internal combustion engine power system and the main reducer; thus the battery power system can be laid reasonably on the automobile chassis and the scheme of the multi-power system automobile with internal combustion engine power system as well as battery power system can be really realized; and the big problem puzzling researchers in the field for a long time has been solved.

Detailed description of the present invention will be given below by way of examples with reference to the accompanying drawings.

### BRIEF DESCRIPTION OF THE DRAWINGS

Fig. 1a, 1b and 1c are a few possible sketch maps of the electromotor/generator installed on the automobile chassis in the Chines utility model ZL99211216.8.
Fig. 2 is a sketch of the internal structure of the power converter in the Chinese utility model ZL99211216.8.
Fig. 3 is the overall frame sketch map of a typical embodiment of the present invention multi-power electric environmental protection automobile.
Fig. 4 is the sketch map of the second collocation mode of the electromotor/generator on the automobile chassis.
Fig. 5 is the structure sketch map of a typical example of the power converter applied in present invention multi-power electric environmental protection automobile.

### DETAILED DESCRIPTION OF A PREFERRED EMBODIMENT

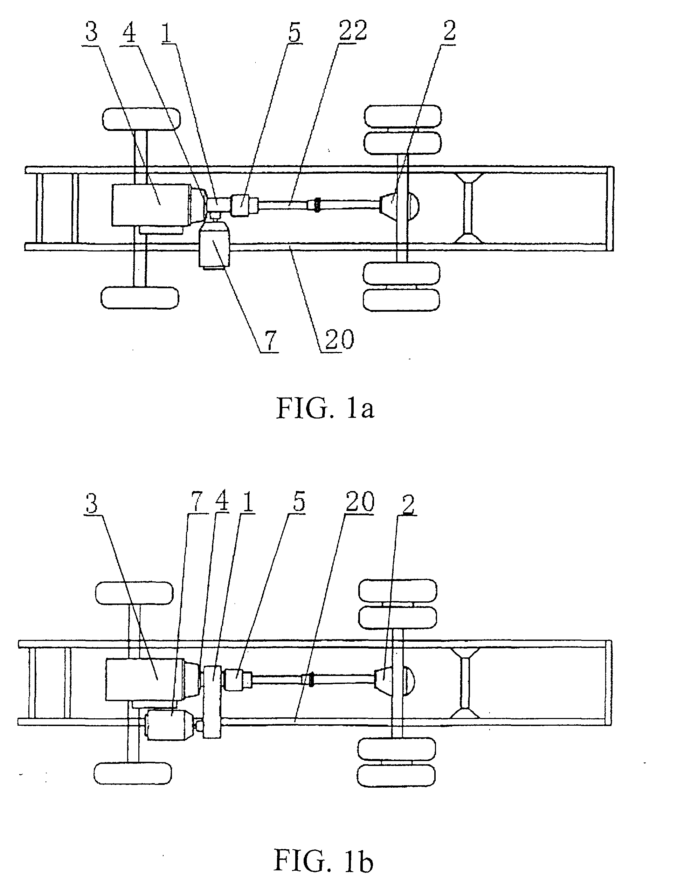

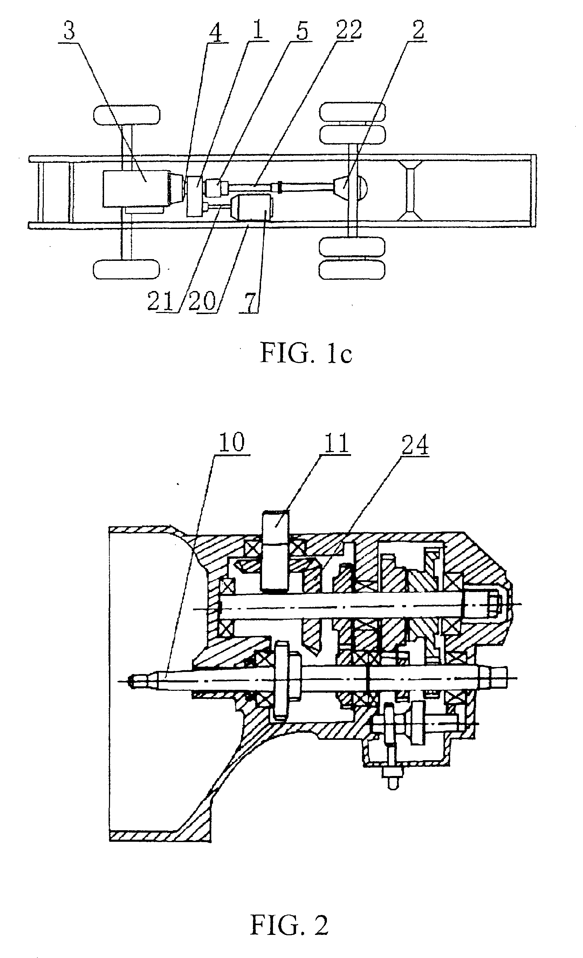

The Chinese utility model ZL99211216.8 presents a collocation scheme of the power converter on the automobile, that is, the power converter is fixed tightly behind of the clutch of the engine. After investigation and research, the inventor of the present invention discovered that, according to Chinese utility model ZL99211216.8, there are three selective schemes about the location of the electromotor/generator on the automobile chassis shown as Fig. 1a, 1b and 1c. As the first one shows in Fig. 1a, the electromotor/generator 7 is vertical to the side beam 20 of the automobile chassis. Due to the fact that the distance between the power converter 1 and the side beam 20 is too narrow, the electromotor/generator 7 cannot be mounted. Therefore, the electromotor/generator 7 must be installed above the side beam 20, which inevitably results in that the bodywork of the automobile will move upward and its barycenter will be over the normal height. In fact, it doesn't work in practical operation. As the second one shows in Fig. 1b, the electromotor/generator 7 is parallel to chassis side beam 20 and the electromotor/generator 7 is installed on the side of engine 3. The electromotor/generator 7 cannot be mounted on the inside of the chassis side beam 20, because the engine 3 has taken up much space between the two chassis side beams 20. Therefore, the electromotor/generator 7 must also be installed above the chassis side beam 20. In fact, it doesn't work either in practical operation. As the third one shows in Fig. 1c, the electromotor/generator 7 is parallel to the chassis side beam 20, and the electromotor/generator 7 is installed on the side of transmission case 5. The electromotor/generator 7 cannot be installed on the inside of the chassis side beam 20 closely to the transmission case 5, because the transmission case 5 has taken up some space between the two chassis side beams 20. Therefore, the electromotor/generator 7 has to be installed between the main transmission axis 22 and the chassis side beam 20 by lengthening the output axis 21 of the electromotor/generator 7 and keeping away from transmission case 5. But it is still not advisable for it will turn out to increase the decentration of the axis 21 and arose more friction and bring instability or uncertainty in transmission.

Fig. 2 shows the internal structure of the power converter in Chinese utility model ZL99211216.8, in which the internal combustion engine power input axis 10 in the power converter is vertical to the battery power input axis 11, and the electromotor/generator can only be vertical to the chassis side beam, which is impossible in practical application. Besides, the power converter adopts umbrella gears 24 as transmission parts, thus the reliability of operation cannot be ensured.

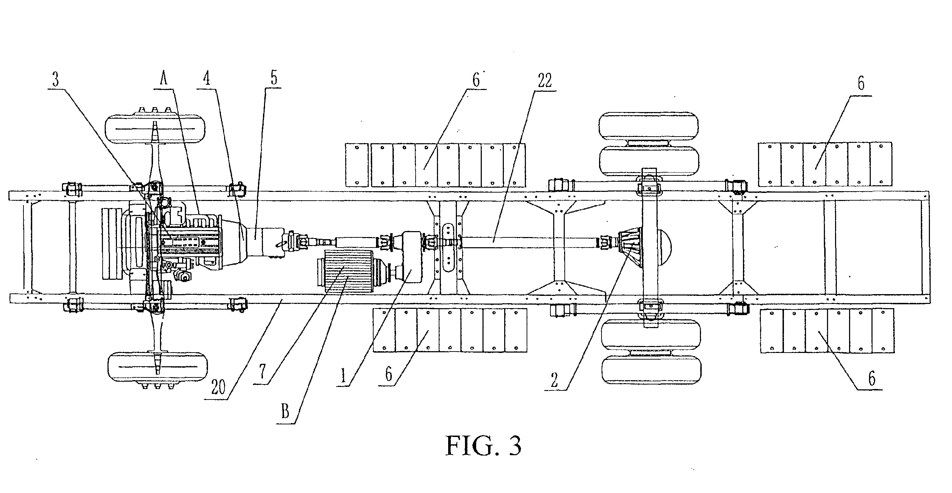

Fig. 3 shows the overall frame sketch map of a typical embodiment of the present invention multi-power electric environmental protection automobile. In the embodiment, the automobile includes a internal combustion engine power system A, a battery power system B, a power converter 1 and a main reducer 2; the said internal combustion engine power system A includes the orderly connected engine 3, clutch 4 and transmission case 5; the first input end of the power converter 1 is connected to the output of the transmission case 5; the second input end of the power converter 1 connected to the output of the battery power system B; the output end of the power converter 1 connected to the input end of the main reducer 2. The battery power system B involves a battery group 6, an electromotor/generator 7 which may function as a electromotor when driven by electric power and as a generator while driven by mechanical energy, and a controller which is connected between the battery group 6 and the electromotor/generator 7 and can adjust the operation of the electromotor/generator. The output end of the electromotor/generator 7 is connected to the second input end of the power converter 1. The controller can adjust the power and operation according to the requirement while the battery group 6 is supplying power to the electromotor/generator 7 to drive the automobile; it can switch the electromotor/generator 7 into a condition of generator and charge the battery when the surplus energy of the internal combustion engine system is transformed into the energy of the battery group 6. There are quite a few kinds of controllers in existing technology. In practical handling, they can be worked out and made into the suited chips through the existing computer technology as requested.

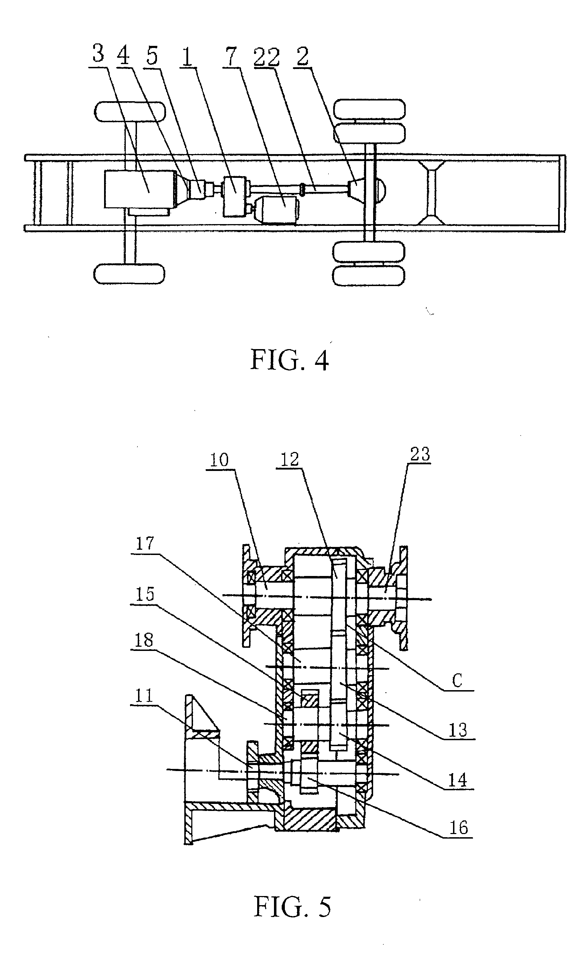

In the above embodiment of the present invention, the power converter 1 is located between the transmission case 5 of the internal combustion engine power system and the main reducer 2 . The electromotor/generator 7 can avoid the engine 3, transmission case 5 and be mounted between the main transmission axis 22 and the chassis side beam 20 of the automobile, which means it can either be installed on the side of the engine 3 as Fig. 3 or on the side away from the engine 3 as Fig. 4. In this way, the automobile can have the barycenter the same high as a normal one. Consequently, the scheme of an automobile with multi-power systems of internal combustion engine power system and electric power system can be really realized.

As Fig. 5 shows, the power converter 1 applied in the present invention includes a internal combustion engine power input axis 10 and a battery power input axis 11; one end of the input axis 10 is connected to the output of the transmission case 5; the other end of the input axis 10 is the output end 23 of the power converter 1 and is connected to the input end of the main reducer 2. The input axis 10 and the battery power input axis 11 are parallel to each other and are connected through the transmission gear group C. In this embodiment, the transmission gear group C involves gear 12, gear 13, gear 14, gear 15 and gear 16; gear 12 is installed onto the input axis 10, gear 13 onto the axis 17, gear 14 and 15 onto axis 18, gear 16 onto input axis 11; axis 17 and 18 are parallel to the input axis 10 and the input axis 11; gear 12 meshes with gear 13, gear 13 with gear 14, gear 15 with gear 16. The diameter of gear 12 is bigger than that of gear 13, gear 13 bigger than gear 14, gear 15 bigger than gear 14 and gear 16. when driving an automobile by battery power, gear 12, 13, 14, 15 and 16 operate as transmission and reducing parts, and transfer the power out of the electromotor/generator 7 to output end 23 of the power converter 1 to further input into the main reducer 2 and drive the wheels of the automobile onward. When driving by internal combustion engine power, the power of engine 3 is passed to the transmission case 5 through the clutch 4 and connected to the input axis 10 of the power converter 1. Then the power converter 1 transmits the power to the main reducer 2 from the output end 23 to drive the automobile. The two sets of power system can operate either independently or simultaneously. They operate through the power converter 1.

In the above-mentioned embodiment of the power converter, each axis is parallel to the other one and all gears are cylindrical ones. In this way, the power transmission is reliable and stable. At the same time, the internal combustion engine power input axis 10 is parallel to the battery power input axis 11, thus the electromotor/generator 7 can be laid in parallel with the main transmission axis 22, which can ensure the bodywork in a normal height after the electromotor/generator being installed between the main transmission axis 22 and the chassis side beam 20.

When driving through internal combustion engine power, part of the power output from the engine 3 pass to the main reducer 2 through the output end 23 of the power converter 1 to drive the automobile onward. The rest of the power pass to the input axis 11 through the transmission gear group C and make the input axis 11 contrarotate. Then the electromotor/generator 7 will become a generator and charge the battery group 6 through the controller.

A clutch can be installed between the second input end of the power converter 1 and the output end of the battery power system B. It means that a clutch is set between the output end of the electromotor/generator 7 and the input axis 11. When the clutch is separated, the power of the internal combustion engine is used to drive the automobile entirely. When the clutch is engaged, there are two possibilities according to the requirement. First, the internal combustion engine power system and the battery power system work together to drive the automobile onward, which is mainly applicable to a condition of high speed and moving upward. Second, as stated before, while driving the automobile, the surplus energy of the internal combustion engine power is used to recharge the battery group.

Between the first input end of the power converter 1 and output end of the internal combustion engine power system A, namely between the output end of the transmission case 5 and the input axis 10 of the power converter 1, a clutch may as well be installed. When using internal combustion engine power, the clutch is engaged; when using battery power, the clutch is apart, thus avoiding power pass into the transmission case 5 causing friction and waste of power.

The present invention multi-power electric environmental protection automobile possesses the following advantages: It can turn off the internal combustion engine and adopt battery power driving when running in the thickly populated area to reduce exhaust emission. It can adopt internal combustion engine power to drive the automobile forward, and operate effectively and economically while running in suburb or speedway in which the automobile can run on an average speed and is out of the exhaust emission controlling area. At the same time, the power of the internal combustion engine can recharge the battery group through the electromotor/generator to fully utilize the surplus energy and extend the distance by electric driving. In a condition of moving upward, it can adopt the multi-power driving system under the support of the battery power when the internal combustion engine power is inadequate.

## Claims

1. A multi-power electric environmental protection automobile, comprising an internal combustion engine power system (A), a battery power system (B), a power converter (1) and a main reducer (2); the said internal combustion engine power system (A) involves the orderly connected engine (3), clutch (4), and transmission case (5); **characterized in that**, the first input end of the power converter (1) is connected to the output end of the transmission case (5); the second input end of the power converter (1) is connected to the output end of the battery power system (B); and the output end of the power converter (1) is connected to the input end of the main reducer (2).

2. The invention as defined in claim 1, **characterized in that**, the battery power system (B) involves a battery group (6), a electromotor/generator (7) which may function as a electromotor when driven by electric power and as a generator when driven by mechanical energy and a controller which is connected between the battery group (6) and the electromotor/generator (7) and may adjust the operation of the electromotor/generator; the output end of the electromotor/generator (7) is connected to the second input end of the power converter (1).

3. The invention as defined in claim 1, **characterized in that**, said power converter (1) involves a internal combustion engine power input axis (10) and a battery power input axis (11); one end of the input axis (10) is connected to the output of the transmission case (5); the other end of input axis (10) is the output end (23) of the power converter (1) and is connected to the input end of the main reducer (2); the input axis (10) is parallel to the input axis (11) and they are connected one another through a transmission gear group (C).

4. The invention as defined in claim 3, **characterized in that**, said transmission gear group C involves gear (12), (13), (14), (15) and (16); gear (12) is installed onto the input axis (10), gear (13) onto the axis (17), gear (14) and (15) onto the axis (18), gear (16) onto the input axis (11); axis (17) and (18) are parallel to the input axis (10) and the input axis (11); gear (12) is in mesh with gear (13), gear (13) with gear (14), gear (15) with gear (16).

5. The invention as defined in claim 4, **characterized in that**, the diameter of gear (12) is bigger than that of gear (13), gear (13) bigger than gear (14), gear (15) bigger than gear (14) and gear (16)

6. The invention as defined in claim 1, **characterized in that**, a clutch is installed between the second input end of the power converter (1) and the output end of the battery power system (B).

7. The invention as defined in claim 3, **characterized in that**, a clutch is installed between the first input end of the power converter (1) and the output end of the internal combustion engine power system (A), namely between the output end of the transmission case (5) and the input axis (10) of the power converter (1).

8. The invention as defined in claim 4, **characterized in that**, said gear (12), (13), (14), (15) and (16) are all cylindrical gears.
